Europäisches Patentamt

European Patent Office

Office européen des brevets

(11) Publication number: **0 169 282 B1**

# EUROPEAN PATENT SPECIFICATION

(45) Date of publication of patent specification: 27.03.91   (51) Int. Cl.⁵: **G05B 19/04**

(21) Application number: **84305104.6**

(22) Date of filing: **26.07.84**

(54) Control apparatus.

(43) Date of publication of application:
29.01.86 Bulletin 86/05

(45) Publication of the grant of the patent:
27.03.91 Bulletin 91/13

(84) Designated Contracting States:
AT BE CH DE FR GB IT LI LU NL SE

(56) References cited:
CH-A- 486 940
GB-A- 1 237 600
US-A- 3 689 892

PATENTS ABSTRACTS OF JAPAN, vol. 7, no.
93 (P-192)[1238], 19th April 1983; & JP - A - 58
19 905 (KOUYOU DENSHI KOGYO K.K.)
05-02-1983

(73) Proprietor: **Koyo Denshi Kogyo Kabushiki
Kaisha (Koyo Electronics Industries Co. Ltd.)
171 Tenjincho-1-chome
Kodaira-shi Tokyo(JP)**

(72) Inventor: **Kishi, Yoshio
3-7-7 Saiwaicho
Higashikurume-shi Tokyo(JP)**

(74) Representative: **Arthur, George Fitzgerald et al
KILBURN & STRODE 30, John Street
London WC1N 2DD(GB)**

## Description

The present invention relates to a control apparatus of the multi-level setting type, for example for the control of machine tools, or possibly robots, or positioning means, where a number of successive dimensions, positions, or states have to be achieved in turn.

Conventional control apparatus of this type sets and displays its preset values mechanically with the resulting inevitable increase in size, so that only 2 to 3 preset values are practicable.

One object of the invention is to provide a control apparatus so designed that its preset values are set and stored electrically with the resulting increase in the number of preset values and decrease in the size of the apparatus.

GB-A-1 237 600 discloses a control apparatus of the general type to which this invention relates. Its flexibility is, however, limited, in that a particular sequence of operations always has to start at the beginning and continue through until the end. In addition, at each step of the process further control of the apparatus is entirely dependent upon the result of a single comparison between the desired and expected values of a parameter at the previous step.

The first of these difficulties is overcome in the device shown in US-A-3 689 892, a device which has those features set out in the pre-characterising clause of Claim 1. A difficulty still remains, however, with this device in that at each stage control is determined by a single comparison between an expected and an actual parameter at the previous stage. There are many situations where this lack of flexibility causes problems: one specific being the case where it is desired to stop operation of the device to be controlled when a moving part reaches a particular position. With the apparatus shown, there are likely to be difficulties with overrun if the instruction to stop is given only when the desired position is reached. Overrun can of course be reduced or eliminated if an instruction to decelerate is given in advance of the desired stop position, but this requires the user to enter a separate "start decelerating" position for each desired stop position. Every time a stop position is changed, the corresponding "start decelerating" position also has to be changed.

According to the present invention a control apparatus of the known type defined in the preamble of claim 1 is characterised by the features set out in the characterising portion of Claim 1.

The addition of a facility for storing a plurality of additional preset values, each applicable to more than one stage of the work to be carried out, means that, for example, the device may be programmed to start decelerating at a position a predetermined distance short of each of the desired stop points, this predetermined distance requiring to be entered and saved only once when the control apparatus is being set up. In addition to simplifying the set up procedure, and facilitating amendments to the stored preset values, there is also a consequential reduction in the amount of memory required.

There may be means for restart operation after a stop part way through a multi-stage operation, and means for resetting to terminate operation before all stages have been completed and restart at the beginning.

The invention may be put into practice in various ways, but one specific embodiment will now be described by way of example, with reference to the accompanying drawings of which:-

FIGURE 1 is a block diagram showing the overall arrangement of the control apparatus;

FIGURE 2 is a block diagram of the control apparatus of FIGURE 1 arranged to simplify understanding of its operation; and

FIGURE 3 is a flow chart showing the operation of the apparatus of FIGURE, 1 and 2.

The control apparatus includes a counter 11, an input circuit 12; stage computing means 15, preset value input means 18, storage means 13, data transfer means 25, comparison means 21, an output circuit 16, mode selecting means 20, display selective driving means 35 and a display 17 which will be described hereunder.

The counter 11 is a separate item of hardware which counts a digital input which may represent a position achieved by a work tool for example.

The input circuit 12 is capable of being supplied with a reset signal, a stepping signal, a start signal, and a stage specifying signal. The stage specifying signal enables a selected stage to be specified. The stage specifying signal is a signal for specifying the starting stage and is always being input. For example, if the apparatus commences operation from the first stage, a numeral signal corresponding to it shall be input. For another example, if it becomes necessary in the course of operation to bring it back to n-th stage or to skip it to x-th stage after the operation has proceeded foreward or backward successively, a numerical signal corresponding to the n-th or x-th stage shall be input.

The reset signal is a signal for resetting the output circuit 6 and the stage counter 23 which will be described later. When the stage counter 23 is reset, it is so arranged that a stage specifying signal is read in.

The stepping signal is a signal for letting the stage go forward or backward by increasing or decreasing the value of the stage counter 23.

The starting signal is a signal for instructing the stage set on the stage counter to commence the operation.

The relationship between the foregoing signals is as follows:

As the stage specifying signal is always being input as aforesaid, when the apparatus is initially going to start, the reset signal, stepping signal and the starting signal are input in that order. When the apparatus has started the stepping signal and starting signal are input in that order.

In order to bring the operation back to (or skip to) a specific stage, a stage specifying signal corresponding to that specific stage is first input and then a reset signal and a starting signal are input at a proper timing in that order. Thus, a stage corresponding to said stage is set in the stage counter and the apparatus commences the operation beginning with the specified stage.

The preset value input means 18 is a means for inputting the preset values corresponding to the various stages of work, and it may for example be a keyboard. The values may represent dimensions in a machining operation, or positions in a sequence of movement.

The storage means 13 stores a large number of the preset values corresponding to the stages of work. It comprises a stage counter 23 and a preset value storage means 33 and it usually includes a RAM.

The step counter is reset based on a reset signal from the stage computing means, sets a corresponding stage based on a stage specifying signal , and adjusts the count value based on a stepping signal.

The preset value storage means 33 memorises the preset value signals coming from the preset value input means 18. It memorises singular or plural preset values corresponding to each stage and it gives the relevant present value in accordance with an instruction coming from the stage counter 23.

The stage computing means 15 is responsive to the signals from the input circuit 12.

If a reset signal is input, the stage computing means sends signals to read the stage counter 23 and output circuit 6.

If a stepping signal is input, the stage computing means 15 checks the status of the stage counter 23 and, if it is not in reset condition, sends a signal to the stage counter 23 to move the count value backwards or forwards. If it is in reset condition, the stage computing means 15 reads a stage specifying signal and sends a signal for setting the stage value corresponding to said stage specifying signal to stage counter 23. If a start checks the status of the stage counter 23 and if it is not in the reset condition sends a signal so that the stage indicated by the stage counter is performed.

formed.

The data transfer means 25 writes the preset signals from the preset value input means 18 in the preset value storage means 33 and it also reads and transfers the preset value corresponding to the current stage of work shown in the stage counter 23 from the preset value storage means 33.

The comparison means 21 compares the output of the counter 11 and the preset value from the data transfer means 25 as to relative magnitude and equality and generates a signal corresponding to the comparison. It is to be noted that in the operating mode, the comparison means 21 and the data transfer means 25 are each actuated in response to the supply of a start signal.

The output circuit 16 is responsive to the output of the comparison means 21 to generate a control output.

The mode selecting means 20 enables the user to select an operating mode or a setting mode. The setting mode is for effecting the storage of the number of the stages and their preset values in the storage means 33, and the operating mode is for normal operation to perform those stages.

The display selective driving means 35 is responsive to the mode signals from the mode selecting means 20 so that the output of the counter 11 is generated in the operating mode and the preset value from the data transfer means 25 is generated in the setting mode.

The display 17 is responsive to the output from the display selective driving means 35 to display the output of the counter or the preset value and it also displays the number of the running stage. These displays are usually made in the form of digital values.

It is to be noted that the stage computing means 15, the data transfer means 25, and the display selective driving means 35, are formed by an ROM with permanently stored programs and a CPU operable in accordance with the programs. The comparison means 21 may be provided by the ROM and the CPU mentioned above or alternatively it may comprise a separate comparison computing unit.

Also, while it is preferable to design the arrangement so that all the component elements excluding the preset value input means 18 are brought into operation when the operating mode is selected by the mode selecting means 20, and the preset value input means 18, the storage means 13, the data transfer means 25, the display selective driving means 35, and the display unit 17, are brought into operation when the setting mode is selected, the present invention is not of course limited to this arrangement.

The control apparatus makes it possible to define a large number of preset values corresponding to the stages of work, while the apparatus can be small. The counter 11 is a separate item of computer hardware and is not a part of the ROM and CPU mentioned above, and so is a dedicated item and can count at a high speed.

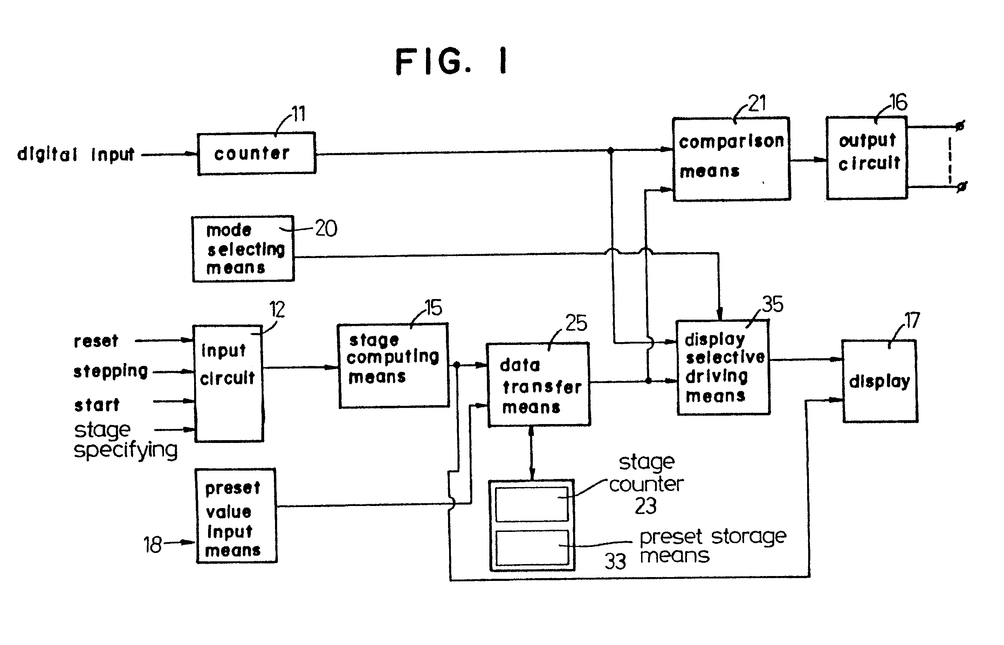

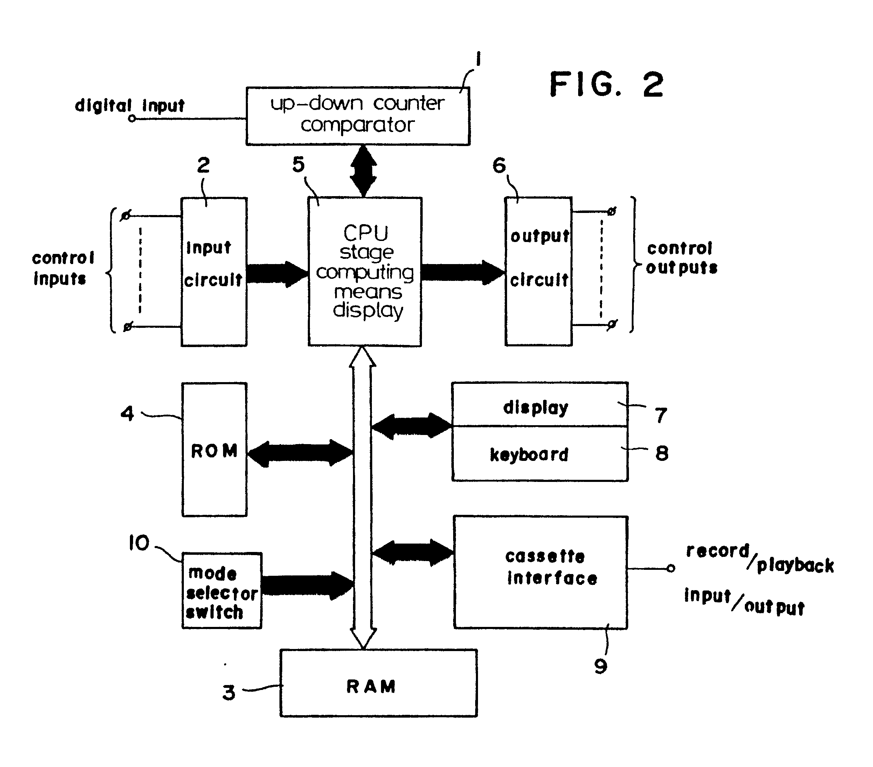

Referring to FIGURE 2, numeral 1 designates an up-down counter which counts a digital input. Also in relation to FIGURE 1, the counter 1 incorporates comparators corresponding to the comparison means 21. Numeral 2 designates an input circuit which is supplied with input signals including a reset signal, stepping signals, a start signal and a stage specifying signal. Numeral 3 designates an RAM storing the preset values corresponding to the stages of work. Numeral 4 designates an ROM storing predetermined programs. Numeral 5 designates a CPU for performing various computational operations in accordance with the programs in the ROM 4. In relation to FIGURE 1, the CPU 5 includes the stage computing means 15, the data transfer means 25 and the display selective driving means 35. Numeral 6 designates an external output in accordance with the comparison result of the comparator in the counter 1 through the CPU 5. Numeral 7 designates a display unit for displaying the current stage and the output of the counter 1 or a preset value. Numeral 8 designates a keyboard which is used mainly for the purpose of writing the preset values in the RAM 3. In relation to FIGURE 1 the keyboard 8 forms the preset value input means 18. Numeral 9 designates a cassette interface which is used to write preset values in the RAM 3 in accordance with an externally reproduced input and to record the preset values of the RAM 3 as a recorded output on an external magnetic tape or the like. Numeral 10 designates a mode selector switch which is used for the selection of various modes.

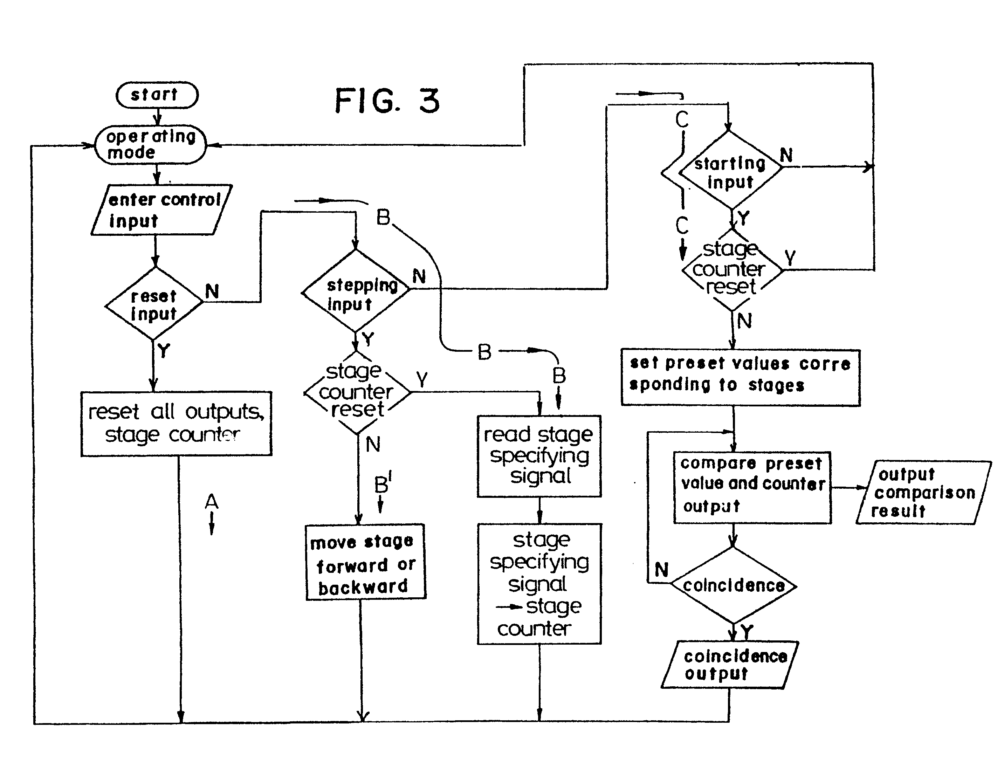

With the construction described above, the operation of the control apparatus as illustrated in the flow chart of FIGURE 3 will now be described assuming that the operating mode has been selected by the mode selector switch 10.

The control signals to be input into the input circuit 2 are actually input as mentioned hereunder. A stage specifying signal is always being input as aforesaid. Other signals are input in the order 'a reset signal - a stepping signal - a starting signal... a stepping signal - a starting signal'. In order to change the flow of stages proceeding forwards and backwards one by one and to skip to a specified stage, a stage specifying signal corresponding to that specified stage shall be input beforehand and then a reset signal is input at a proper timing. Then, a stepping signal and a starting signal follow it as described above.

The operating steps are as follows:-

(1) When the operating mode is selected, a control input is applied to the CPU 5 through the input circuit 2.

2. If the control input is a reset signal, all the outputs of the output circuit 6 and the stage counter 23 are reset.

3. Next, when a stepping signal is input, it is judged by means of the stage computing means 15 if the stage counter 23 is reset or not.

4. Here, as the stage counter 23 is reset, a stage specifying signal is read by means of stage computing means 15 and the stage value corresponding to said stage specifying signal is set in the stage counter 23.

5. Next, when a starting signal is input, it is judged if the stage counter 23 is reset or not.

6. Here, as the stage counter 23 is not reset, a preset value corresponding to the stage value of the stage counter 23 is read out of the preset storage means 33. Then, the preset value is sent out to the comparison means 21 through the intermediary of the data transfer means 25.

7. At the comparison means 21 said preset value corresponding to the running stage is compared with the output of the up-down counter 1.

8. The comparison of 7 is made as to the relative magnitude and equality of the two values so that if, for example, the result is "greater than", the display 7 displays an indication of positive direction and a positive-direction control signal is generated via the output circuit 6. If in contrast the result is "less than", a negative direction indication is displayed on the display 7 and a negative-direction control signal is generated through the output circuit 6.

If equality is found between the preset value and the output of the counter 1 at step 7 a coincidence output is delivered to the output circuit 6.

9. Next, when a stepping signal is input it is judged by means of the step computing means 15 if the stage counter 23 is reset or not.

10. Here as the stage counter 23 is not reset, the stage is let go forward or backward by adding one to the stage value set in the stage counter 23 or reducing one therefrom.

11. Next, when a starting signal is input, said steps 5-8 are effected. Thereafter the steps 9 - 11 are repeated.

In order to change the ordinary flow of the stages, that is to say, for example, after the current stage is over, in order to commence the next operation not from the next stage but from the fourth stage skipping the next three stages, a stage specifying signal corresponding to said fourth stage shall be input beforehand and, when the current stage is over, a reset signal shall be input. Thereby said 1 and the following steps commence to proceed.

The above mentioned steps are performed repeatedly so that each time the output of the counter 1 becomes equal to the preset value corresponding to each stage of work, a control signal is generated from the output circuit 6. While the flow chart does not include a "stop" step and has an endless form, this is because the embodiment is an "endless" example where a return is made to the initial stage after the final stage has been reached.

Since in contrast to conventional control apparatus, the RAM 3 can store a large number of preset values, if the counter apparatus of this embodiment is used as a multipoint positioning apparatus for example, any given supplementary data for positioning control purposes can also be stored in the ram 3.

For instance, in addition to being capable of receiving the various preset values ($l_i$) for the various stages i (i = 1,2...), the keyboard 8 may be used to input additional present values (X,Y), which are written to the RAM 3. When the values are read from the RAM for the current stage (c) the CPU calculates ($l_c$ - X) and ($l_c$ -Y), thus providing three values to be compared with the output of the counter (11) for the current stage (c) instead of one. In this way it is possible to deliver to external units the control signals corresponding to the preset values and effect a finer and proper positioning control.

The above description of the flow chart was based on selection of the operating mode to select corresponding operation of the CPU 5 or the proper progam in the ROM 4. However, many different modes can be selected as occasion demands.

In the operating mode when there is no reset input, it is necessary to provide first a stepping input and then a start input at 12, so that the flow chart follows paths B and then C in Figure 3. If a reset input is applied that is followed by a stepping and then a start-input so that flow paths A,B, and C, in Figure 3 are followed in that order.

Where the control apparatus of this embodiment is used as a multipoint positioning counter, it is conceivable to provide means for selecting such modes as stop, adjusting, setting, copying, and cassette modes in addition to the above-mentioned operating mode. The stop mode stops the operation of the apparatus as a whole and the adjusting mode changes the preset values in the RAM 3, that is, during the continued operation alternative data are written in the RAM 3 by the keyboard 8. The setting mode writes the preset values in the RAM 3. The copying mode writes the current output of the counter 1 in the RAM 3 in accordance with the actual work The cassette mode effects the ensuring operations through the cassette interface 9. In other words, where the same part is produced by each of a large number of machines, the same preset values are written in the RAM of each machine and thus, after the data have been recorded on a magnetic tape, the data are written in the RAM 3 through the cassette interface 9. Also, the contents of the RAM of one machine can be written into the RAM of the other machine through the cassette interface 9.

By providing a variety of modes in this way, it is possible to perform a variety of operations and thereby improve the versatility.

## Claims

1. Control apparatus for controlling a work operation, the apparatus being selectively switchable between at least a setting mode and an operating mode by mode selecting means (20); preset value input means (18) for inputting, in the setting mode, a plurality of preset values ($l_i$) each corresponding to a stage (i) of the work to be carried out, and storage means (13) for electrically storing the preset values ($l_i$) a counter (11) for counting in the operating mode a digital input relating to the operation; comparison means (21) operable in response to a start signal applied to an input circuit (12) to compare an output of the counter (11) and the stored preset value ($l_c$) corresponding to the stage (c) of work reached and to generate an output signal indicative of the result of the said comparison; an output circuit (16) responsive to the said output signal to generate a control output; and stage computing means (15) responsive to a stepping signal supplied to the input circuit (12) to step the operation to the next (C + 1) or the preceding (C-1) stage, and responsive to a reset signal selectively applied to the input circuit (12) to reset the operation to a selected stage of work; **characterised in that**, in the setting mode, the preset value input means (18) are arranged to input, and the storage means (13) are arranged to store, an additional preset value (X) applicable to more than one stage of the work to be carried out; and in that, in the operating mode, the comparison means (21) is arranged to compare the output of the counter (11) with an additional value ($l_c$-X) dependent upon the stored preset value ($l_c$) for the current stage (c) and the additional present value (X) to produce an additional output signal which is applied to the output circuit (16) to produce an additional control output.

2. Control apparatus as claimed in Claim 1 in which the stage computing means (15) is arranged to generate a current stage signal.

3. Control apparatus as claimed in Claim 1 or Claim 2 in which the comparison means (21) is arranged to compare the output from the counter (11) with the corresponding preset value as to relative magnitude and equality.

4. Control apparatus as claimed in any one of the preceding claims also comprising display selective driving means responsive to the mode selecting means (20) to generate a signal corresponding to the counter output or the preset value for the current stage.

5. Control apparatus as claimed in Claim 4 also comprising display means (17) responsive to the signal from the display selective driving means (35) to display the counter output, or the preset value of the current stage and the current stage.

6. Control apparatus as claimed in any one of the preceding claims in which the counter (11) is discrete from any other components of the apparatus.

7. Control apparatus as claimed in any one of the preceding claims for use in controlling a sequential series of operations performed by a machine.

8. Control apparatus as claimed in any one of the preceding claims arranged to restart the operation from the said selected stage on receipt by the input circuit (12) of a stage-specifying signal followed by the reset signal.

**Revendications**

1. Appareil de commande destiné à la commande d'une opération de travail, l'appareil pouvant être commuté sélectivement entre au moins un mode de réglage et un mode de fonctionnement par des moyens de choix (20); des moyens (18) d'entrée de valeurs réglées au préalable pour entrer, dans le mode de réglage, plusieurs valeurs ($I_i$) réglées au préalable correspondant chacune à un stade (i) du travail effectué, et des moyens de mémorisation (13) pour mémoriser électriquement la valeur réglée au préalable ($I_i$), un compteur (11) pour compter dans le mode de fonctionnement une entrée numérique concernant le fonctionnement; des moyens de comparaison (21) pouvant fonctionner en réponse à un signal de début appliqué à un circuit d'entrée (12) pour comparer une sortie du compteur (11) et la valeur mémorisée ($I_c$) établie au préalable correspondant au stade (c) de travail atteint et à engendrer un signal de sortie indicatif du résultat de ladite comparaison; un circuit de sortie (16) sensible audit signal de sortie pour engendrer une sortie de commande; et des moyens (15) de calcul de stade sensibles à un signal de progression fourni au circuit d'entrée (12) pour que le fonctionnement passe au stade suivant (C + 1) ou au stade précédent (C-1) et sensibles à un signal de repositionnement appliqué sélectivement au circuit d'entrée (12) pour repositionner le fonctionnement à un stade choisi de travail; caractérisé en ce que, dans le mode de réglage, les moyens (18) d'entrée de valeurs, réglées au préalable sont agencés pour entrer, et les moyens de mémorisation (13) sont agencés pour mémoriser, une valeur additionnelle réglée au préalable (X) applicable à plus d'un stade du travail à effectuer; et en ce que, dans le mode de fonctionnement, le moyen de comparaison (21) est agencé pour comparer la sortie du compteur (11) à une valeur additionnelle ($I_c$-X) dépendant de la valeur mémorisée réglée au préalable ($I_c$) pour le stade courant (c) et la valeur additionnelle présente (X) pour produire un signal de sortie additionnelle qui est appliqué au circuit de sortie (16) pour produire une sortie de commande additionnelle.

2. Appareil de commande selon la revendication 1 dans lequel le moyen de calcul (15) de stade est agencé pour engendrer un signal courant de stade.

3. Appareil de commande selon la revendication 1 ou la revendication 2 dans lequel le moyen de comparaison (21) est agencé pour comparer la sortie provenant du compteur (11) à la valeur correspondante réglée au préalable en ce qui concerne l'amplitude et l'égalité.

4. Appareil de commande selon l'une quelconque des revendications précédentes comprenant en outre des moyens électifs d'excitation d'affichage sensibles aux moyens (20) de choix de mode pour engendrer un signal correspondant à la sortie du compteur ou à la valeur réglée au préalable pour le stade courant.

5. Appareil de commande selon la revendication 4 comprenant de plus des moyens d'affichage (17) sensibles au signal provenant des moyens sélectifs (35) d'excitation d'affichage pour afficher la sortie du compteur, ou la valeur réglée au préalable du stade courant et le stade courant.

6. Appareil de commande selon l'une quelconque des revendications précédentes dans lequel le compteur (11) est distinct, ou discret, par rapport à tous les autres composants de l'appareil.

7. Appareil de commande selon l'une quelconque des revendications précédentes à utiliser pour commander une série d'opérations exécutées par une machine.

8. Appareil de commande selon l'une quelconque des revendications précédentes agencé pour débuter à nouveau l'opération à partir du stade choisi à la réception par le circuit d'entrée (12) d'un signal spécifiant le stade suivi du signal de repositionnement.

## Ansprüche

1. Steuervorrichtung zum Steuern eines Arbeitsvorganges, wobei die Vorrichtung selektiv zumindest zwischen einer Einstell-Betriebsart und einer Arbeits-Betriebsart mit Hilfe einer Betriebsart-Wähleinrichtung (20) schaltbar ist; mit einer Voreinstellwert-Eingabeeinrichtung (18), um in der Einstell-Betriebsart eine Mehrzahl von Voreinstellwerten ($I_i$) einzugeben, die je einer Stufe (i) der auszuführenden Arbeit entsprechen, und einer Speichereinrichtung (13) zum elektrischen Speichern der Voreinstellwerte ($I_i$), einem Zähler (11) zum Zählen eines sich auf den Arbeitsvorgang beziehenden digitalen Eingangs in der Arbeits-Betriebsart; einer Vergleichseinrichtung (21), die in Ansprechen auf ein einem Eingangskreis (12) zugeführtes Startsignal betreibbar ist, um einen Ausgang des Zählers (11) und den gespeicherten Voreinstellwert ($I_c$) entsprechend der erreichten Arbeitsstufe (c) zu vergleichen und ein das Vergleichsergebnis anzeigendes Ausgangssignal zu erzeugen; einem auf das Ausgangssignal ansprechenden Ausgangskreis (16) zum Erzeugen eines Steuerausgangs; und einer Stufenberechnungseinrichtung (15), die auf ein dem Eingangskreis (12) zugeführtes Schrittsignal anspricht, um den Arbeitsvorgang schrittweise zur nächsten (C + 1) oder vorhergehenden (C-1) Stufe umzuschalten, und die auf ein selektiv dem Eingangskreis (12) zugeführtes Rückstellsignal anspricht, um den Arbeitsvorgang auf eine ausgewählte Arbeitsstufe zurückzustellen, dadurch gekennzeichnet, daß in der Einstell-Betriebsart die Voreinstellwert-Eingabeeinrichtung (18) eingerichtet ist, einen zusätzlichen Voreinstellwert (X), der für mehr als eine Stufe der durchzuführenden Arbeit anwendbar ist, einzugeben und die Speichereinrichtung (13) eingerichtet ist, diesen zusätzlichen Voreinstellwert (X) zu speichern; und daß in der Arbeits-Betriebsart die Vergleichseinrichtung (21) eingerichtet ist, den Ausgang des Zählers (11) mit einem zusätzlichen Wert ($I_c$-X), der abhängig ist vom gespeicherten Voreinstellwert ($I_c$) für die momentane Stufe (c) und vom vorliegenden zusätzlichen Wert (X), zu vergleichen, um eine zusätzliches Ausgangssignal zu erzeugen, welches an den Ausgangskreis (16) angelegt wird, um einen zusätzlichen Steuerausgang zu erzeugen.

2. Steuervorrichtung nach Anspruch 1, bei der die Stufenberechnungseinrichtung (15) eingerichtet ist, ein Momentanstufensignal zu erzeugen.

3. Steuervorrichtung nach Anspruch 1 oder 2, bei der die Vergleichseinrichtung (21) eingerichtet ist, den Ausgang des Zählers (11) mit dem entsprechenden Voreinstellwert hinsichtlich der relativen Größe und Gleichheit zu vergleichen.

4. Steuervorrichtung nach einem der vorhergehenden Ansprüche, weiters mit einer Anzeigeselektiven Treibereinrichtung, die auf die Betriebsart-Wähleinrichtung (20) anspricht, um ein Signal entsprechend dem Zählerausgang oder dem Voreinstellwert für die momentane Stufe zu erzeugen.

5. Steuervorrichtung nach Anspruch 4, weiters mit einer Anzeigeeinrichtung (17), die auf das Signal aus der Anzeigeselektiven Treibereinrichtung (35) anspricht, um den Zählerausgang oder den Voreinstellwert der momentanen Stufe und die momentane Stufe anzuzeigen.

6. Steuervorrichtung nach einem der vorhergehenden Ansprüche, bei der der Zähler (11) von allen anderen Bauteilen der Vorrichtung getrennt ist.

7. Steuervorrichtung nach einem der vorhergehenden Ansprüche, zur Verwendung bei der Steuerung einer aufeinanderfolgenden Reihe von Arbeitsgängen, die von einer Maschine ausgeführt werden.

8. Steuervorrichtung nach einem der vorhergehenden Ansprüche, eingerichtet zum neuerlichen Starten des Betriebs von der ausgewählten Stufe an auf den Empfang eines eine Stufe angebenden Signals, gefolgt vom Rückstellsignal, durch den Eingabekreis (12).

# FIG. I

FIG. 2

EP 0 169 282 B1

FIG. 3